# EUROPEAN PATENT APPLICATION

(11) **EP 4 730 865 A1**
(43) Date of publication of application: **22.04.2026**
(21) Application number: 24855322.4
(22) Date of filing: 19.04.2024
(51) Int. Cl.: H04W 36/00, H04W 36/30, H04W 4/40

(54) **COMMUNICATION INTERFACE SWITCHING METHOD AND APPARATUS IN V2X COMMUNICATION**

(30) Priority: 23.08.2023 CN 202311070246
(71) Applicant: ZTE CORPORATION, Shenzhen, Guangdong 518057 (CN)
(72) Inventor: HUANG, Cheng, Shenzhen, Guangdong 518057 (CN); CHEN, Xiao, Shenzhen, Guangdong 518057 (CN); WANG, Qiang, Shenzhen, Guangdong 518057 (CN)
(74) Representative: Pennacchio, Salvatore Giovanni
(86) International application number: PCT/CN2024/088928
(87) International publication number: WO 2025/039591

(57) **Abstract**

Provided in the embodiments of the present disclosure are a communication interface switching method and apparatus in V2X communication. The method comprises: acquiring an uplink PC5 channel performance parameter on the basis of a BSM received by a roadside unit, and acquiring a downlink PC5 channel performance parameter on the basis of an RSM received by a vehicle-mounted unit; and determining the communication mode switching between a PC5 interface and a Uu interface of the vehicle-mounted unit on the basis of the uplink PC5 channel performance parameter and the downlink PC5 channel performance parameter.

## Description

### Cross-Reference to Related Application

The present disclosure is based on and claims priority to Chinese patent application CN202311070246.1 filed on August 23, 2023 and entitled "Communication Interface Switching Method and Apparatus in V2X Communication", the disclosure of which is incorporated herein by reference in its entirety.

### Technical Field

Embodiments of the present disclosure relate to the technical field of Internet of Vehicles (IoV), and in particular, to a communication interface switching method and apparatus in Vehicle-to-Everything (V2X) communication.

### Background

At present, China's construction policy for the Internet of Vehicles (IoV) based on Cellular Vehicle-to-Everything (C-V2X) technologies has been established. Since 2018, numerous demonstration projects of IoV applications based on Long-Term Evolution Cellular Vehicle-to-Everything (LTE-C2X) have been carried out across the country, and various IoV applications based on vehicle-road coordination in demonstration areas have also been widely verified. Moreover, generalized C-V2X communication technologies include two communication modes: PC5-based direct communication and Uu interface-based mobile cellular network communication. How to switch between these two communication modes to improve vehicle communication quality is also a current research topic.

In related technologies, there are already some schemes for switching between the PC5 interface and the Uu interface. However, these schemes require information interaction between a V2X server and a Network Data Analytics Function (NWDAF) module in the core network, and also need to judge whether to switch the communication interface based on average performance parameters of multiple vehicles within the coverage of a base station. As a result, the processing delay is relatively long, making it difficult to guarantee the communication quality of vehicles.

Therefore, the problem of enabling a vehicle to switch a communication interface quickly urgently needs to be solved.

### Summary

The embodiments of the present disclosure provide a communication interface switching method and apparatus in V2X communication, which may at least solve the problem in the related art that an interface needs to be switched quickly to improve communication quality of a vehicle.

According to an embodiment of the present disclosure, provided is a communication interface switching method in V2X communication, including: acquiring an uplink PC5 channel performance parameter according to a Basic Safety Message (BSM) message received by a roadside unit, and acquiring a downlink PC5 channel performance parameter according to a Roadside Safety Message (RSM) message received by an on-board unit; and determining communication mode switching between a PC5 interface and a Uu interface of the on-board unit based on the uplink PC5 channel performance parameter and the downlink PC5 channel performance parameter.

According to another embodiment of the present disclosure, provided is a communication interface switching apparatus in V2X communication, including: an acquisition unit, configured to acquire an uplink PC5 channel performance parameter according to a Basic Safety Message (BSM) message received by a roadside unit, and acquire a downlink PC5 channel performance parameter according to a Roadside Safety Message (RSM) message received by an on-board unit; and a determination unit, configured to determine communication mode switching between a PC5 interface and a Uu interface of the on-board unit based on the uplink PC5 channel performance parameter and the downlink PC5 channel performance parameter.

According to still another embodiment of the present disclosure, also provided is a computer-readable storage medium. A computer program is stored in the computer-readable storage medium, and the computer program, when executed by a processor, causes the processor to implement the operations in any one of the method embodiments.

According to yet another embodiment of the present disclosure, also provided is an electronic device, including a memory and a processor, wherein the memory stores a computer program, and the processor is configured to run the computer program so as to implement the operations in any one of the method embodiments.

### Brief Description of the Drawings

Fig. 1 is a network architecture diagram for running a communication interface switching method in V2X communication according to an embodiment of the present disclosure;
Fig. 2 is a flowchart of a communication interface switching method in V2X communication according to an embodiment of the present disclosure;
Fig. 3 is a flowchart of acquiring an uplink PC5 channel performance parameter according to a BSM message received by a roadside unit according to an embodiment of the present disclosure;
Fig. 4 is a flowchart of acquiring a downlink PC5 channel performance parameter according to an RSM message received by an on-board unit according to an embodiment of the present disclosure;
Fig. 5 is a flowchart of a first mode for determining communication mode switching between a PC5 interface and a Uu interface of the on-board unit based on the uplink PC5 channel performance parameter and the downlink PC5 channel performance parameter according to an embodiment of the present disclosure;
Fig. 6 is a flowchart of a second mode for determining communication mode switching between the PC5 interface and the Uu interface of the on-board unit based on the uplink PC5 channel performance parameter and the downlink PC5 channel performance parameter according to an embodiment of the present disclosure;
Fig. 7 is a flowchart of a third mode for determining communication mode switching between the PC5 interface and the Uu interface of the on-board unit based on the uplink PC5 channel performance parameter and the downlink PC5 channel performance parameter according to an embodiment of the present disclosure;
Fig. 8 is a schematic diagram of a switching process between the PC5 interface and the Uu interface initiated by the on-board unit according to an embodiment of the present disclosure;
Fig. 9 is a schematic diagram of a switching process between the PC5 interface and the Uu interface initiated by a V2X server at a network side according to an embodiment of the present disclosure; and
Fig. 10 is a structural block diagram of a communication interface switching apparatus in V2X communication according to an embodiment of the present disclosure.

### Detailed Description of the Embodiments

Embodiments of the present disclosure will be described below in detail with reference to the accompanying drawings and in conjunction with the embodiments.

It should be noted that, terms such as "first" and "second" in the description, claims, and accompanying drawings of the present disclosure are used to distinguish similar objects, but are not necessarily used to describe a specific sequence or order.

At present, China's construction policy for the Internet of Vehicles (IoV) based on Cellular Vehicle-to-Everything (C-V2X) technologies has been established. Since 2018, numerous demonstration projects of IoV applications based on Long-Term Evolution Cellular Vehicle-to-Everything (LTE-C2X) have been carried out across the country, and various IoV applications based on vehicle-road coordination in the demonstration areas have also been widely verified. Although generalized C-V2X communication technologies include two communication modes, i.e., PC5-based direct communication and Uu interface-based mobile cellular network communication, the current vehicle-road coordination applications in the demonstration areas are mainly verified through the PC5-based communication mode, which requires large-scale deployment of Roadside Units (RSUs) on the roadside for coverage. Obviously, this single communication mode can only be deployed in demonstration areas and hot-spot regions, and cannot be promoted on urban roads nationwide. This is because deploying a brand-new PC5 V2X network will face problems such as excessive investment in full coverage, low penetration rate of on-board units, poor operability, and low input/output economy, making the business model difficult to operate in practice. Considering the popularization of China's 5G network infrastructure and terminals, building an IoV based on the 5G Uu communication mode and fully utilizing the existing computing resources of 5G Baseband Units (BBUs) and Multi-access Edge Computing (MEC) of operators is an important and indispensable supplement, and is also a key approach to rapidly expand the coverage of IoV applications and enhance the value of data generated on the roadside of the IoV. In 2023, China Mobile has begun to organize large-scale vehicle-road coordination application tests based on 5G Uu and 5G base stations. In China Mobile's solution architecture, the base station implements the function of an integrated communication and sensing unit (e.g., Virtual Roadside Unit (vRSU)) by adding computing power boards, and establishes a connection with a V2X cloud control platform. The integrated communication and sensing unit is responsible for packaging roadside sensing results into V2X messages, adapting the V2X messages to the Uu interface, and then sending the V2X messages to vehicles through the Uu interface. Similarly, vehicles also send the adapted V2X messages to the integrated communication and sensing unit on the base station side through the Uu interface.

It should be noted that although the vehicle-road coordination communication solution based on the 5G Uu interface has advantages such as high reliability and large coverage compared with the PC5-based direct communication solution based on LTE C-V2X, the PC5-based direct communication solution based on LTE C-V2X still has incomparable advantages in certain aspects. For example, in the embodiments of the present disclosure, the communication between vehicles and roadside RSU devices mainly adopts the PC5 broadcast mode, where one communication can enable multiple vehicles or devices to receive messages; while the Uu interface currently uses a unicast mode for communication, where only one device can receive a message each time. For another example, the broadcast mode does not require consideration of service continuity requirements, while the unicast mode requires designing a scheme to ensure service continuity during vehicle movement.

In the process of actual service deployment in the future, there will inevitably be a scenario where the mobile operator network based on the 5G Uu interface and the V2X operator network based on the PC5 direct communication interface coexist and provide services together. Considering that both the PC5-based direct communication mode based on LTE C-V2X and the vehicle-road coordination communication mode based on the 5G Uu interface have their own advantages and disadvantages, it is necessary to comprehensively consider multiple factors such as channels, resources, and services during vehicle travel to flexibly and dynamically select an appropriate communication mode. At present, there are already some schemes in the industry for switching between the PC5 interface and the Uu interface. However, these schemes not only require information interaction between the V2X server and a Network Data Analytics Function (NWDAF) module in the core network, resulting in relatively long processing delay that cannot support delay-sensitive V2X applications, but also judge whether to switch the communication interface based on the average performance parameters of multiple vehicles within the coverage of the base station, making it impossible to select an appropriate communication interface for each individual vehicle. To make up for the above defects, it is necessary to design a simple and feasible application layer service parameter measurement method that does not require the participation of the core network, and rely on this method to design a set of PC5 and Uu interface switching schemes in V2X communication.

In related technologies, for example, there is already a mechanism for Quality of Service (QoS) change early warning in the 3GPP standards. The goal of this mechanism is to enable the 5G system, specifically the NWDAF module in the core network, to monitor relevant network parameters after receiving a request from the V2X Application Server (V2X AS) and notify the V2X AS of the existence of QoS changes. The NWDAF module will provide, in the notification, the area and time slot where the QoS may change, as well as the network parameter values that lead to this judgment. Furthermore, the aforementioned network parameter values are derived based on the average value of the network parameters of all vehicles in the base station coverage area.

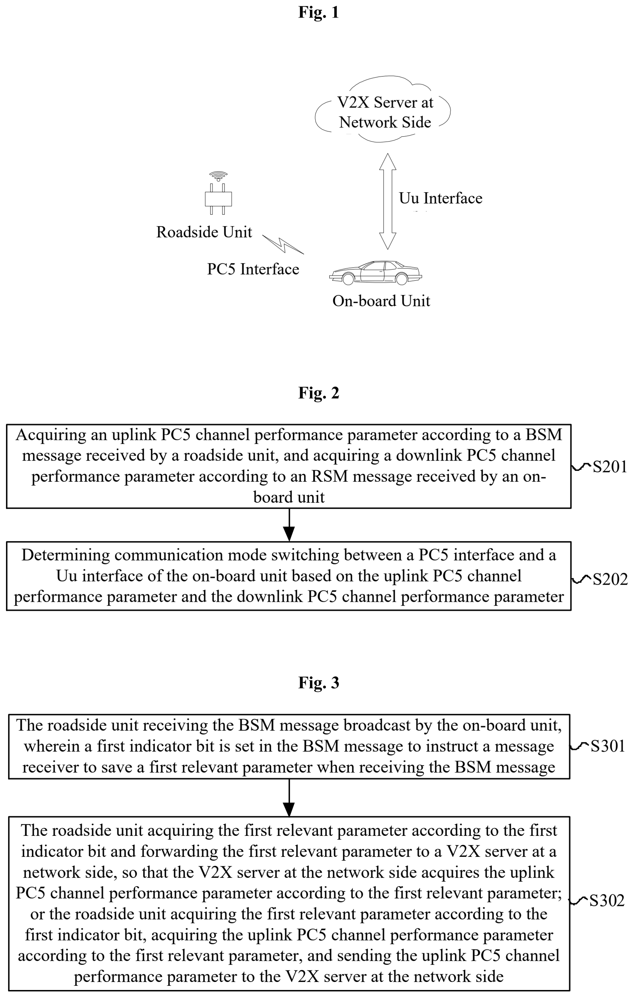

The embodiments of the present disclosure may run on the network architecture shown in Fig. 1. Fig. 1 is a network architecture diagram for running a communication interface switching method in V2X communication according to an embodiment of the present disclosure. As shown in Fig. 1, the network architecture includes: an on-board unit, a roadside unit, and a V2X server at a network side. The on-board unit and the roadside unit may communicate through a PC5 interface, the roadside unit may communicate with the V2X server at the network side through a transport network, and the V2X server at the network side and the on-board unit may communicate through a Uu interface.

In this embodiment, a communication interface switching method in V2X communication running on the above-mentioned mobile terminal or network architecture is provided. Fig. 2 is a flowchart of a communication interface switching method in V2X communication according to an embodiment of the present disclosure. As shown in Fig. 2, the process includes the following operations S201 and S202.

In operation S201, an uplink PC5 channel performance parameter is acquired according to a Basic Safety Message (BSM) received by the roadside unit, and a downlink PC5 channel performance parameter is acquired according to a Roadside Safety Message (RSM) received by the on-board unit.

In an implementation, taking the acquisition of the uplink PC5 channel performance parameter as an example, the roadside unit acquires communication information between the on-board unit and the roadside unit by receiving BSM messages sent by the on-board unit of a vehicle. The BSM message may carry sending time of the BSM message, receiving time of the BSM message, an identifier of the on-board unit, a serial number of the BSM message, or the like. The roadside unit may use the communication information to evaluate indicators such as delay, delay jitter, and packet loss rate of the uplink PC5 channel. Taking the acquisition of the downlink PC5 channel performance parameter as an example, the on-board unit acquires communication information between the roadside unit and the on-board unit by receiving RSM messages sent by the roadside unit. The RSM message may carry sending time of the RSM message, receiving time of the RSM message, an identifier of the on-board unit, a serial number of the RSM message, or the like. The on-board unit may use the communication information to evaluate indicators such as delay, delay jitter, and packet loss rate of the downlink PC5 channel.

In operation S202, communication mode switching is determined between a PC5 interface and a Uu interface of the on-board unit based on the uplink PC5 channel performance parameter and the downlink PC5 channel performance parameter.

The roadside unit and the on-board unit monitor the uplink PC5 channel performance parameter and the downlink PC5 channel performance parameter, such as delay, delay jitter, or packet loss rate, according to the received BSM and RSM messages. By periodically or in real-time monitoring these performance parameters, the quality and stability of the current communication environment can be acquired.

The timing for switching the communication mode may be determined according to preset thresholds and a preset strategy. For example, the thresholds for the uplink PC5 channel performance parameter and the downlink PC5 channel performance parameter may be set, and the uplink PC5 channel performance parameter or the downlink PC5 channel performance parameter is compared with the corresponding thresholds. When the uplink PC5 channel performance parameter or the downlink PC5 channel performance parameter reaches or exceeds the set threshold, switching of the communication mode may be triggered.

When the condition for switching the communication mode is triggered, the on-board unit may select to switch to the Uu interface or the PC5 interface according to a preset strategy. When switching to the Uu interface, the on-board unit may communicate using a cellular network and provide a more stable network connection by communicating with a base station. When switching to the PC5 interface, the on-board unit may communicate directly with the roadside unit and provide communication with lower delay through collaboration with other vehicles.

Through the above operations, by collecting and analyzing the PC5 channel performance parameters, and determining the trigger conditions for interface switching and resource preparation based on these parameters, the information interaction process is performed between the on-board unit and the roadside unit, which greatly reduces data waiting time and shortens delay. Moreover, when the PC5 channel performance parameter does not meet the threshold, it indicates that the communication quality through the PC5 interface is poor at this time, and switching from the PC5 interface to the Uu interface can be selected, thereby improving the communication quality of the vehicle.

Since the communication quality between each vehicle and the roadside unit can be determined according to the uplink PC5 channel performance parameter and the downlink PC5 channel performance parameter of each vehicle, the interface of each vehicle can be switched separately according to the communication quality. Compared with related technologies, the participation of the core network is not required, and there is no need to collect information of multiple vehicles. Adjustment decisions are made in a targeted manner based on the information of a single vehicle, which greatly shortens the delay. In addition, the data is more in line with the actual situation of each vehicle. Therefore, the problem of being unable to select an appropriate communication interface for each vehicle can be solved, and the effect of improving the communication quality of each vehicle is achieved.

Fig. 3 is a flowchart of acquiring an uplink PC5 channel performance parameter according to a BSM message received by a roadside unit according to an embodiment of the present disclosure. As shown in Fig. 3:
in an implementation, acquiring the uplink PC5 channel performance parameter according to the BSM message received by the roadside unit includes the following operations S301 and S302.

In operation S301, the roadside unit receives the BSM message broadcast by the on-board unit, wherein a first indicator bit is set in the BSM message to instruct a message receiver to save a first relevant parameter when receiving the BSM message.

In operation S302, the roadside unit acquires the first relevant parameter according to the first indicator bit and forwards the first relevant parameter to the V2X server at the network side, so that the V2X server at the network side acquires the uplink PC5 channel performance parameter according to the first relevant parameter; or the roadside unit acquires the first relevant parameter according to the first indicator bit, acquires the uplink PC5 channel performance parameter according to the first relevant parameter, and sends the uplink PC5 channel performance parameter to the V2X server at the network side.

For example, a vehicle (equipped with an on-board unit) is traveling and broadcasts a BSM message to a nearby roadside unit. The BSM message includes the first indicator bit and the first relevant parameter. After receiving the BSM message, the roadside unit processes the BSM message according to the first indicator bit. For example, when the first indicator bit is 1, indicating that the message receiver needs to save the first relevant parameter when receiving the BSM message, the roadside unit extracts the first relevant parameter and forwards the first relevant parameter to the V2X server at the network side. After receiving the first relevant parameter, the V2X server at the network side may calculate the uplink PC5 channel performance parameter according to the first relevant parameter. The uplink PC5 channel performance parameter may include parameters such as delay, uplink delay jitter, and uplink packet loss rate of the uplink PC5 channel. These parameters can be used to evaluate the communication quality between the on-board unit and the roadside unit. In another case, after detecting that the first indicator bit is 1, the roadside unit directly calculates the uplink PC5 channel performance parameter according to the first relevant parameter and sends the uplink PC5 channel performance parameter to the V2X server at the network side. In this way, the V2X server at the network side can directly acquire the uplink PC5 channel performance parameter for evaluating the communication quality. Through the above manner, the roadside unit can acquire the uplink PC5 channel performance parameter according to the received BSM message and transmit the uplink PC5 channel performance parameter to the V2X server at the network side. In this way, the V2X server at the network side can evaluate the communication quality according to the uplink PC5 channel performance parameter and perform communication mode switching or other optimization measures as needed.

In an implementation, the first relevant parameter includes at least one of: sending time of the BSM message, receiving time of the BSM message, a serial number of the BSM message, or an identifier of the on-board unit.

For example, the identifier of the on-board unit may bind the vehicle to the BSM message to facilitate targeted adjustment of the vehicle.

In an implementation, acquiring the uplink PC5 channel performance parameter according to the first relevant parameter includes at least one of:
acquiring delay of an uplink PC5 channel based on a difference between the sending time of the BSM message and the receiving time of the BSM message,
wherein for example, by recording the time stamps of the sending time and the receiving time in the BSM message, the transmission delay of the BSM message on the uplink PC5 channel can be calculated; delay refers to the time difference experienced by the BSM message from the sender to the receiver, which can be used to evaluate the transmission efficiency and delay of the uplink PC5 channel;
calculating uplink delay jitter based on historical delay of the uplink PC5 channel,
wherein for example, the uplink delay jitter of the uplink PC5 channel refers to the degree of variation in transmission delay of the same BSM message in different time periods; by recording the transmission delays of multiple BSM messages on the uplink PC5 channel, statistical indicators of delay jitter, such as standard deviation or mean absolute deviation, can be calculated, and the magnitude of delay jitter can reflect the stability and reliability of the uplink PC5 channel; or,
acquiring uplink packet loss rate based on the serial number of the BSM message,
wherein for example, a BSM message usually includes a unique serial number to identify the order and integrity of the BSM message, by comparing the serial numbers of consecutive BSM messages, it can be determined whether there is a packet loss; the uplink packet loss rate refers to the probability of message loss on the uplink PC5 channel; by counting the number of packet losses and the total number of sent messages, the uplink packet loss rate can be calculated, which is used to evaluate the reliability and stability of the uplink PC5 channel.

The above solution can help evaluate the performance and quality of the uplink PC5 channel, so as to perform performance optimization and troubleshooting in the communication system. By monitoring indicators such as delay, delay jitter, and packet loss rate, problems of the uplink PC5 channel can be found and solved in a timely manner, and the efficiency and reliability of communication can be improved.

In an implementation, before the roadside unit receives the BSM message broadcast by the on-board unit, the method further includes:
the on-board unit broadcasts the BSM message to the roadside unit periodically through the PC5 interface, or broadcasts the BSM message to the roadside unit after being triggered by a predetermined event.

For example, the predetermined event may be that the on-board unit does not receive a V2X message sent by the roadside unit after exceeding a preset window time.

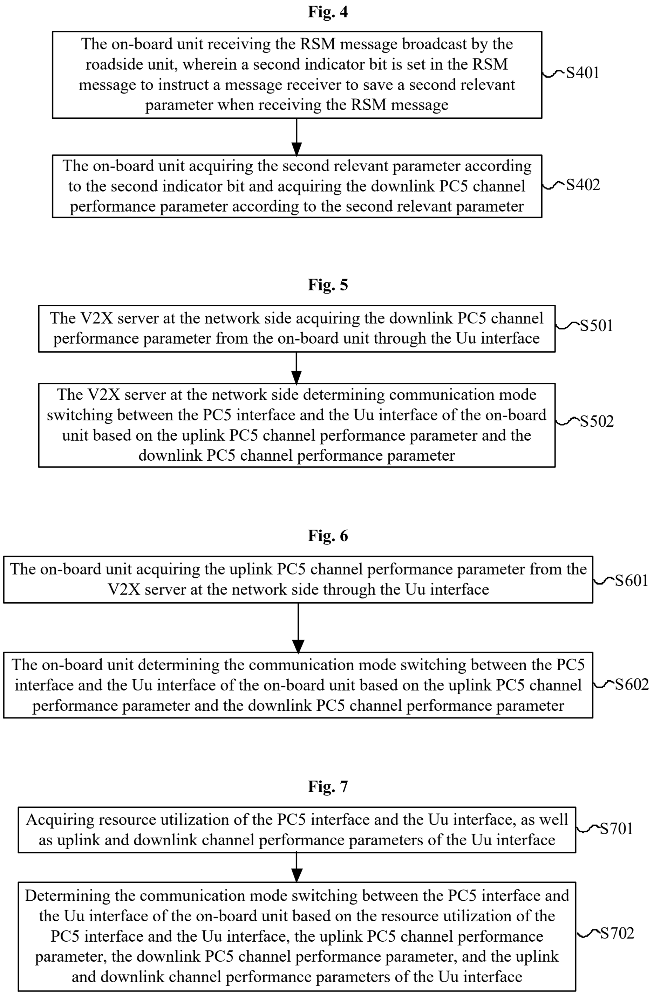

Fig. 4 is a flowchart of acquiring a downlink PC5 channel performance parameter according to an RSM message received by an on-board unit according to an embodiment of the present disclosure. As shown in Fig. 4,
in an implementation, acquiring the downlink PC5 channel performance parameter according to the RSM message received by the on-board unit includes the following operations S401 and S402.

In operation S401, the on-board unit receives the RSM message broadcast by the roadside unit, wherein a second indicator bit is set in the RSM message to instruct a message receiver to save a second relevant parameter when receiving the RSM message.

In operation S402, the on-board unit acquires the second relevant parameter according to the second indicator bit and acquires the downlink PC5 channel performance parameter according to the second relevant parameter.

For example, a vehicle is traveling, and a roadside unit broadcasts an RSM message on the roadside. The RSM message includes the second indicator bit and the second relevant parameter. After receiving the RSM message, the on-board unit processes the RSM message according to the second indicator bit. For example, when the second indicator bit is 1, indicating that the message receiver needs to save the second relevant parameter when receiving the RSM message, the on-board unit extracts the second relevant parameter and acquires the downlink PC5 channel performance parameter according to the second relevant parameter. The downlink PC5 channel performance parameter includes parameters such as delay, downlink delay jitter, and downlink packet loss rate of the downlink PC5 channel. These parameters can be used to evaluate the communication quality between the roadside unit and the on-board unit. Through the above operations, the on-board unit can acquire the downlink PC5 channel performance parameter according to the received RSM message. In this way, the on-board unit can evaluate the communication quality according to the downlink PC5 channel performance parameter and perform communication mode switching or other optimization measures as needed.

In an implementation, the second relevant parameter includes at least one of: sending time of the RSM message, receiving time of the RSM message, a serial number of the RSM message, or an identifier of the on-board unit.

For example, the identifier of the on-board unit may bind the vehicle to the RSM message to facilitate targeted adjustment of the vehicle.

In an implementation, acquiring the downlink PC5 channel performance parameter according to the second relevant parameter includes at least one of:
acquiring delay of a downlink PC5 channel based on a difference between the sending time of the RSM message and the receiving time of the RSM message,
wherein for example, by recording the time stamps of the sending time and the receiving time in the RSM message, the transmission delay of the message on the downlink PC5 channel can be calculated; delay refers to the time difference experienced by the RSM message from the sender to the receiver, which can be used to evaluate the transmission efficiency and delay of the downlink PC5 channel;
calculating downlink delay jitter based on historical delay of the downlink PC5 channel,
wherein for example, the downlink delay jitter of the downlink PC5 channel refers to the degree of variation in transmission delay of the same RSM message in different time periods; by recording the transmission delays of multiple RSM messages on the downlink PC5 channel, statistical indicators of delay jitter, such as standard deviation or mean absolute deviation, can be calculated, and the magnitude of delay jitter can reflect the stability and reliability of the downlink PC5 channel; or,
acquiring downlink packet loss rate based on the serial number of the RSM message,
wherein for example, an RSM message usually includes a unique serial number to identify the order and integrity of the RSM message; by comparing the serial numbers of consecutive RSM messages, it can be determined whether there is a packet loss; the downlink packet loss rate refers to the probability of message loss on the downlink PC5 channel, by counting the number of packet losses and the total number of sent messages, the downlink packet loss rate can be calculated, which is used to evaluate the reliability and stability of the downlink PC5 channel.

The above solution can help evaluate the performance and quality of the downlink PC5 channel, so as to perform performance optimization and troubleshooting in the communication system. By monitoring indicators such as delay, delay jitter, and packet loss rate, problems of the downlink PC5 channel can be found and solved in a timely manner, and the efficiency and reliability of communication can be improved.

In an implementation, before the on-board unit receives the RSM message broadcast by the roadside unit, the method further includes:
the roadside unit broadcasts the RSM message to the on-board unit periodically through the PC5 interface, or broadcasts the RSM message to the on-board unit after being triggered by a predetermined event.

For example, the predetermined event may be that the roadside unit does not receive a V2X message from the on-board unit or an instruction message from the V2X server at the network side after a preset window time.

Fig. 5 is a flowchart of a first mode for determining communication mode switching between a PC5 interface and a Uu interface of the on-board unit based on the uplink PC5 channel performance parameter and the downlink PC5 channel performance parameter according to an embodiment of the present disclosure. As shown in Fig. 5,
in an implementation, determining the communication mode switching between the PC5 interface and the Uu interface of the on-board unit based on the uplink PC5 channel performance parameter and the downlink PC5 channel performance parameter includes the following operations S501 and S502.

In operation S501, the V2X server at the network side acquires the downlink PC5 channel performance parameter from the on-board unit through the Uu interface.

For example, the V2X server at the network side communicates with the on-board unit through the Uu interface to acquire the performance parameter of the on-board unit on the downlink PC5 channel. The performance parameter may include indicators such as delay, delay jitter, and packet loss rate of the downlink PC5 channel. By acquiring these parameters, the V2X server at the network side can understand the current communication quality and performance status of the on-board unit.

In operation S502, the V2X server at the network side determines the communication mode switching between the PC5 interface and the Uu interface of the on-board unit based on the uplink PC5 channel performance parameter and the downlink PC5 channel performance parameter.

For example, according to the uplink PC5 channel performance parameter and the downlink PC5 channel performance parameter, the V2X server at the network side can make a decision on switching the communication mode between the PC5 interface and the Uu interface of the on-board unit. According to changes in real-time performance parameters, the V2X server at the network side can determine whether the current communication quality meets the requirements. If the current communication quality meets the requirements, the V2X server at the network side determines to continue to use the PC5 interface for communication; if the current communication quality does not meet the requirements, the V2X server at the network side can choose to switch to the Uu interface for communication.

By switching according to real-time performance parameters, the communication between the on-board unit and the network side can always be maintained in a good state, and the stability and reliability of communication can be improved. This communication mode switching based on performance parameters can be dynamically adjusted according to actual conditions to adapt to different communication environments and requirements. By timely acquiring and analyzing performance parameters, the network side can decide whether to switch the communication mode according to the current communication status of the on-board unit, thereby optimizing communication quality and performance.

Fig. 6 is a flowchart of a second mode for determining communication mode switching between the PC5 interface and the Uu interface of the on-board unit based on the uplink PC5 channel performance parameter and the downlink PC5 channel performance parameter according to an embodiment of the present disclosure. As shown in Fig. 6,
in an implementation, determining the communication mode switching between the PC5 interface and the Uu interface of the on-board unit based on the uplink PC5 channel performance parameter and the downlink PC5 channel performance parameter includes the following operations S601 and S602.

In operation S601, the on-board unit acquires the uplink PC5 channel performance parameter from the V2X server at the network side through the Uu interface.

For example, the on-board unit communicates with the V2X server at the network side through the Uu interface to acquire the uplink PC5 channel performance parameter sent by the V2X server at the network side. The uplink PC5 channel performance parameter may include indicators such as delay, delay jitter, and packet loss rate of the uplink PC5 channel. By acquiring uplink PC5 channel performance parameter, the on-board unit can understand the current communication quality and performance status of the uplink PC5 channel.

In operation S602, the on-board unit determines the communication mode switching between the PC5 interface and the Uu interface of the on-board unit based on the uplink PC5 channel performance parameter and the downlink PC5 channel performance parameter.

For example, according to the uplink PC5 channel performance parameter and the downlink PC5 channel performance parameter, the on-board unit can make a decision on switching the communication mode between the PC5 interface and the Uu interface. According to changes in real-time performance parameters, the on-board unit can determine whether the current communication quality meets the requirements. If the current communication quality meets the requirements, the on-board unit determines to continue to use the PC5 interface for communication; if the current communication quality does not meet the requirements, the on-board unit may choose to switch to the Uu interface for communication. By switching according to real-time performance parameters, the communication between the on-board unit and the network side can always be maintained in a good state, and the stability and reliability of communication can be improved. This communication mode switching based on performance parameters can be dynamically adjusted according to actual conditions to adapt to different communication environments and requirements. By acquiring and analyzing performance parameters, the on-board unit can decide whether to switch the communication mode according to the current communication status, thereby optimizing communication quality and performance.

Fig. 7 is a flowchart of a third mode for determining communication mode switching between the PC5 interface and the Uu interface of the on-board unit based on the uplink PC5 channel performance parameter and the downlink PC5 channel performance parameter according to an embodiment of the present disclosure. As shown in Fig. 7,
in an implementation, determining the communication switching between the PC5 interface and the Uu interface of the on-board unit based on the uplink PC5 channel performance parameter and the downlink PC5 channel performance parameter includes the following operations S701 and S702.

In operation S701, resource utilization of the PC5 interface and the Uu interface, as well as uplink and downlink channel performance parameters of the Uu interface, is acquired.

For example, the on-board unit acquires the resource utilization of the PC5 interface and the Uu interface, and at the same time, the on-board unit also acquires the uplink and downlink channel performance parameters of the Uu interface. By acquiring these parameters, the on-board unit can understand the resource utilization of the PC5 interface and the Uu interface, as well as the communication quality and performance status of the Uu interface.

In operation S702, the communication mode switching between the PC5 interface and the Uu interface of the on-board unit is determined based on the resource utilization of the PC5 interface and the Uu interface, the uplink PC5 channel performance parameter, the downlink PC5 channel performance parameter, and the uplink and downlink channel performance parameters of the Uu interface.

For example, the V2X server at the network side can acquire the uplink and downlink channel performance parameters of the Uu interface. According to the resource utilization of the PC5 interface and the Uu interface, the on-board unit can determine whether the current communication load and resource utilization meet the requirements. According to the uplink PC5 channel performance parameter, the downlink PC5 channel performance parameter, and the uplink and downlink channel performance parameters of the Uu interface, the on-board unit can determine whether the current communication quality meets the requirements. Based on these parameters, the on-board unit can make a decision on switching the communication mode between the PC5 interface and the Uu interface. If the resource utilization and communication quality of both the PC5 interface and the Uu interface meet the requirements, the on-board unit determines to continue to use the PC5 interface for communication; if either one of the resource utilization and communication quality of both the PC5 interface and the Uu interface does not meet the requirements, the on-board unit may choose to switch to the Uu interface for communication. By switching according to resource utilization and performance parameters, communication resources can be reasonably allocated, and the efficiency and reliability of communication can be improved. This communication mode switching based on resource utilization and performance parameters can be dynamically adjusted according to actual conditions to adapt to different communication environments and requirements. By real-time acquiring and analyzing resource utilization and performance parameters, the on-board unit can decide whether to switch the communication mode according to its own and the communication environment conditions, thereby optimizing communication quality and performance.

In an implementation, the V2X server at the network side is located in one of: a base station, a core network, or an application layer.

It should be noted that the switching process between the PC5 interface and the Uu interface may be initiated by the on-board unit or the V2X server at the network side.

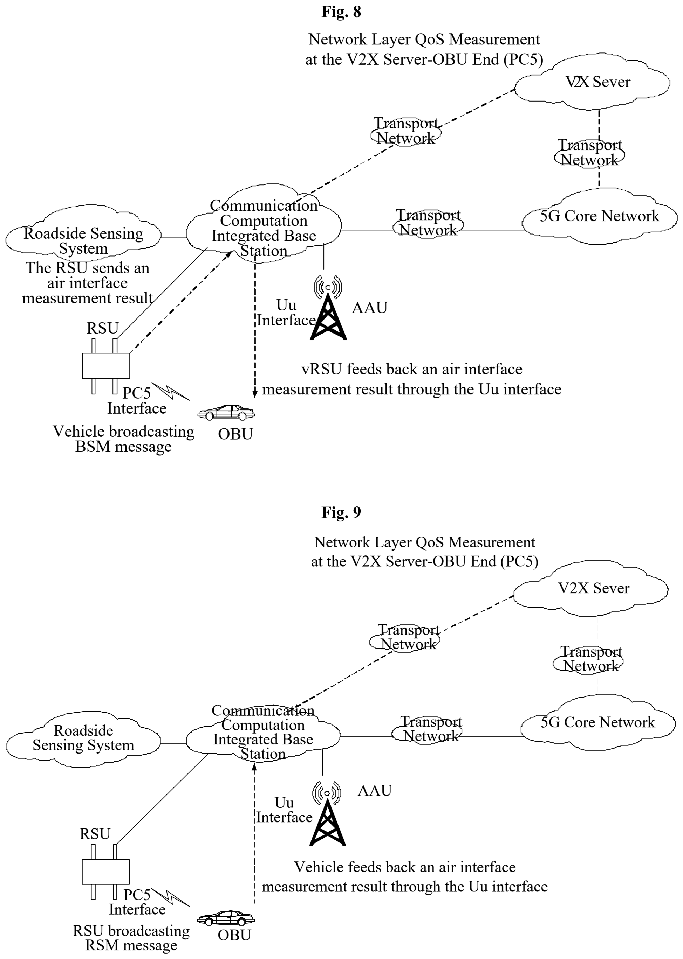

Fig. 8 is a schematic diagram of a switching process between the PC5 interface and the Uu interface initiated by the on-board unit according to an embodiment of the present disclosure. As shown in Fig. 8, to support the on-board unit to initiate the switching process, the V2X server at the network side needs to send the air interface delay, delay jitter, and packet loss rate of the uplink PC5 channel to the on-board unit through the Uu interface, and simultaneously send the resource utilization (which can be indicated in various ways, such as indicating three levels: high, medium, and low) of the Uu interface and the PC5 interface of the V2X server at the network side to the on-board unit. The on-board unit determines whether the current service needs to switch from the PC5 interface to the Uu interface or from the Uu interface to the PC5 interface comprehensively based on the uplink and downlink air interface delay, delay jitter, packet loss rate, and resource utilization. When the on-board unit needs to switch the interface for communication, the communication may switch from the Uu interface to the PC5 interface or from the PC5 interface to the Uu interface.

Fig. 9 is a schematic diagram of a switching process between the PC5 interface and the Uu interface initiated by a V2X server at a network side according to an embodiment of the present disclosure. As shown in Fig. 9, to support the V2X server at the network side to initiate the switching process, the on-board unit needs to send the air interface delay, delay jitter, and packet loss rate of the downlink PC5 channel to the V2X server at the network side through the Uu interface. The V2X server at the network side determines whether the current service needs to switch from the PC5 interface to the Uu interface or from the Uu interface to the PC5 interface comprehensively based on the uplink and downlink air interface delay, delay jitter, packet loss rate, and resource utilization. When the V2X server at the network side determines that the interface for communication needs to be switched, the communication may switch from the Uu interface to the PC5 interface or from the PC5 interface to the Uu interface.

Through the description of the above implementations, those skilled in the art can clearly understand that the method according to the above embodiments can be implemented by means of software plus a necessary general hardware platform, and of course, can also be implemented by hardware. However, in many cases, the former is a better implementation manner. Based on such understanding, the technical solution of the present disclosure, in essence, or the part that contributes to the related technology, can be embodied in the form of a software product. The computer software product is stored in a storage medium (such as Read-Only Memory (ROM)/Random Access Memory (RAM), magnetic disk, optical disk) and includes several instructions to enable a terminal device (which may be a mobile phone, a computer, a server, a network device, etc.) to execute the methods described in the various embodiments of the present disclosure.

In this embodiment, a communication interface switching apparatus in V2X communication is also provided. The apparatus is configured to implement the above embodiments and exemplary implementations, and the descriptions already provided will not be repeated here. As used below, the term "module" may refer to a combination of software and/or hardware that implements a predetermined function. Although the apparatus described in the following embodiments is preferably implemented by software, implementations by hardware or a combination of software and hardware are also possible and conceived.

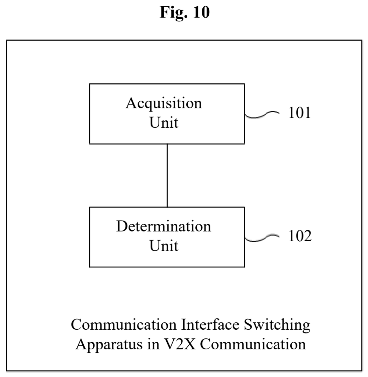

Fig. 10 is a structural block diagram of a communication interface switching apparatus in V2X communication according to an embodiment of the present disclosure. As shown in Fig. 10, the apparatus includes:
an acquisition unit 101, configured to acquire an uplink PC5 channel performance parameter according to a Basic Safety Message (BSM) received by a roadside unit, and acquire a downlink PC5 channel performance parameter according to a Roadside Safety Message (RSM) received by an on-board unit;
a determination unit 102, configured to determine communication switching between the PC5 interface and the Uu interface of the on-board unit based on the uplink PC5 channel performance parameter and the downlink PC5 channel performance parameter.

In an implementation, the uplink PC5 channel performance parameter includes at least one of: uplink air interface delay, uplink delay jitter, or uplink packet loss rate; and the downlink PC5 channel performance parameter includes at least one of: downlink air interface delay, downlink delay jitter, or downlink packet loss rate.

In an implementation, the apparatus is further configured such that acquiring the uplink PC5 channel performance parameter according to the BSM message received by the roadside unit includes:
the roadside unit receiving the BSM message broadcast by the on-board unit, wherein a first indicator bit is set in the BSM message to instruct a message receiver to save a first relevant parameter when receiving the BSM message;
the roadside unit acquiring the first relevant parameter according to the first indicator bit and forwarding the first relevant parameter to a V2X server at a network side, so that the V2X server at the network side acquires the uplink PC5 channel performance parameter according to the first relevant parameter; or the roadside unit acquiring the first relevant parameter according to the first indicator bit, acquiring the uplink PC5 channel performance parameter according to the first relevant parameter, and sending the uplink PC5 channel performance parameter to the V2X server at the network side.

In an implementation, the first relevant parameter includes at least one of: sending time of the BSM message, receiving time of the BSM message, a serial number of the BSM message, or an identifier of the on-board unit.

In an implementation, the apparatus is further configured such that acquiring the uplink PC5 channel performance parameter according to the first relevant parameter includes at least one of:
acquiring delay of an uplink PC5 channel based on a difference between the sending time of the BSM message and the receiving time of the BSM message;
calculating uplink delay jitter based on historical delay of the uplink PC5 channel; or,
acquiring uplink packet loss rate based on the serial number of the BSM message.

In an implementation, before the roadside unit receives the BSM message broadcast by the on-board unit, the apparatus is further configured such that:
the on-board unit broadcasts the BSM message to the roadside unit periodically through the PC5 interface, or broadcasts the BSM message to the roadside unit after being triggered by a predetermined event.

In an implementation, the apparatus is further configured such that acquiring the downlink PC5 channel performance parameter according to the RSM message received by the on-board unit includes:
the on-board unit receiving the RSM message broadcast by the roadside unit, wherein a second indicator bit is set in the RSM message to instruct a message receiver to save a second relevant parameter when receiving the RSM message;
the on-board unit acquiring the second relevant parameter according to the second indicator bit and acquiring the downlink PC5 channel performance parameter according to the second relevant parameter.

In an implementation, the second relevant parameter includes at least one of: sending time of the RSM message, receiving time of the RSM message, a serial number of the RSM message, or an identifier of the on-board unit.

In an implementation, the apparatus is further configured such that acquiring the downlink PC5 channel performance parameter according to the second relevant parameter includes at least one of:
acquiring delay of a downlink PC5 channel based on a difference between the sending time of the RSM message and the receiving time of the RSM message;
calculating downlink delay jitter based on historical delay of the downlink PC5 channel; or,
acquiring downlink packet loss rate based on the serial number of the RSM message.

In an implementation, before the on-board unit receives the RSM message broadcast by the roadside unit, the apparatus is further configured such that:
the roadside unit broadcasts the RSM message to the on-board unit periodically through the PC5 interface, or broadcasts the RSM message to the on-board unit after being triggered by a predetermined event.

In an implementation, the apparatus is further configured such that determining the communication mode switching between the PC5 interface and the Uu interface of the on-board unit based on the uplink PC5 channel performance parameter and the downlink PC5 channel performance parameter includes:
the V2X server at the network side acquiring the downlink PC5 channel performance parameter from the on-board unit through the Uu interface;
the V2X server at the network side determining the communication mode switching between the PC5 interface and the Uu interface of the on-board unit based on the uplink PC5 channel performance parameter and the downlink PC5 channel performance parameter.

In an implementation, the apparatus is further configured such that determining the communication mode switching between the PC5 interface and the Uu interface of the on-board unit based on the uplink PC5 channel performance parameter and the downlink PC5 channel performance parameter includes:
the on-board unit acquiring the uplink PC5 channel performance parameter from the V2X server at the network side through the Uu interface;
the on-board unit determining the communication mode switching between the PC5 interface and the Uu interface of the on-board unit based on the uplink PC5 channel performance parameter and the downlink PC5 channel performance parameter.

In an implementation, the apparatus is further configured such that determining the communication switching between the PC5 interface and the Uu interface of the on-board unit based on the uplink PC5 channel performance parameter and the downlink PC5 channel performance parameter includes:
acquiring resource utilization of the PC5 interface and the Uu interface, as well as uplink and downlink channel performance parameters of the Uu interface;
determining the communication mode switching between the PC5 interface and the Uu interface of the on-board unit based on the resource utilization of the PC5 interface and the Uu interface, the uplink PC5 channel performance parameter, the downlink PC5 channel performance parameter, and the uplink and downlink channel performance parameters of the Uu interface.

In an implementation, the V2X server at the network side is located in one of: a base station, a core network, or an application layer.

It should be noted that each of the above modules may be implemented by software or hardware. For the latter, the implementation may include, but is not limited to: the above modules are all located in the same processor; or the above modules are respectively located in different processors in any combination.

The embodiments of the present disclosure further provide a computer-readable storage medium, wherein a computer program is stored in the computer-readable storage medium, and the computer program is configured to execute the operations in any one of the above method embodiments when running.

In an exemplary embodiment, the above-mentioned computer-readable storage medium may include, but is not limited to: a USB flash drive, a Read-Only Memory (ROM), a Random Access Memory (RAM), a mobile hard disk, a magnetic disk, an optical disk, and other media capable of storing computer programs.

The embodiments of the present disclosure further provide an electronic device, including a memory and a processor, wherein the memory stores a computer program, and the processor is configured to run the computer program to execute the operations in any one of the above method embodiments.

In an exemplary embodiment, the above-mentioned electronic device may further include a transmission device and an input/output device, wherein the transmission device is connected to the processor, and the input/output device is connected to the processor.

Specific examples in this embodiment may refer to the examples described in the above embodiments and exemplary implementations, and this embodiment will not be repeated here.

Obviously, those skilled in the art should understand that each module or each step of the present disclosure described above can be implemented by a general computing device. They can be concentrated on a single computing device, or distributed on a network composed of multiple computing devices. They can be implemented by program codes executable by a computing device, so that they can be stored in a storage device and executed by a computing device. In some cases, the steps shown or described can be executed in an order different from that here, or they can be respectively made into individual integrated circuit modules, or multiple modules or operations among them can be made into a single integrated circuit module to implement. In this way, the present disclosure is not limited to any specific combination of hardware and software.

The above descriptions are only exemplary embodiments of the present disclosure and are not intended to limit the present disclosure. For those skilled in the art, the present disclosure may have various modifications and changes. Any modifications, equivalent substitutions, improvements, etc., made within the principles of the present disclosure shall be included in the protection scope of the present disclosure.

## Claims

1. A communication interface switching method in Vehicle-to-Everything, V2X, communication, comprising:
acquiring an uplink PC5 channel performance parameter according to a Basic Safety Message, BSM, message received by a roadside unit, and acquiring a downlink PC5 channel performance parameter according to a Roadside Safety Message, RSM, message received by an on-board unit; and
determining communication mode switching between a PC5 interface and a Uu interface of the on-board unit based on the uplink PC5 channel performance parameter and the downlink PC5 channel performance parameter.

2. The method according to claim 1, wherein the uplink PC5 channel performance parameter comprises at least one of: uplink air interface delay, uplink delay jitter, or uplink packet loss rate; and the downlink PC5 channel performance parameter comprises at least one of: downlink air interface delay, downlink delay jitter, or downlink packet loss rate.

3. The method according to claim 1, wherein acquiring the uplink PC5 channel performance parameter according to the BSM message received by the roadside unit comprises:
receiving, by the roadside unit, the BSM message broadcast by the on-board unit, wherein a first indicator bit is set in the BSM message to instruct a message receiver to save a first relevant parameter when receiving the BSM message; and
acquiring, by the roadside unit, the first relevant parameter according to the first indicator bit, and forwarding, by the roadside unit, the first relevant parameter to a V2X server at a network side, so that the V2X server at the network side acquires the uplink PC5 channel performance parameter according to the first relevant parameter; or acquiring, by the roadside unit, the first relevant parameter according to the first indicator bit, acquiring, by the roadside unit, the uplink PC5 channel performance parameter according to the first relevant parameter, and sending, by the roadside unit, the uplink PC5 channel performance parameter to the V2X server at the network side.

4. The method according to claim 3, wherein the first relevant parameter comprises at least one of: sending time of the BSM message, receiving time of the BSM message, a serial number of the BSM message, or an identifier of the on-board unit.

5. The method according to claim 4, wherein acquiring the uplink PC5 channel performance parameter according to the first relevant parameter comprises at least one of:
acquiring delay of an uplink PC5 channel based on a difference between the sending time of the BSM message and the receiving time of the BSM message;
calculating uplink delay jitter based on historical delay of the uplink PC5 channel; or,
acquiring uplink packet loss rate based on the serial number of the BSM message.

6. The method according to claim 3, wherein before receiving, by the roadside unit, the BSM message broadcast by the on-board unit, the method further comprises:
broadcasting, by the on-board unit, the BSM message to the roadside unit periodically through the PC5 interface, or broadcasting, by the on-board unit, the BSM message to the roadside unit after being triggered by a predetermined event.

7. The method according to claim 1, wherein acquiring the downlink PC5 channel performance parameter according to the RSM message received by the on-board unit comprises:
receiving, by the on-board unit, the RSM message broadcast by the roadside unit, wherein a second indicator bit is set in the RSM message to instruct a message receiver to save a second relevant parameter when receiving the RSM message; and
acquiring, by the on-board unit, the second relevant parameter according to the second indicator bit, and acquiring, by the on-board unit, the downlink PC5 channel performance parameter according to the second relevant parameter.

8. The method according to claim 7, wherein the second relevant parameter comprises at least one of: sending time of the RSM message, receiving time of the RSM message, a serial number of the RSM message, or an identifier of the on-board unit.

9. The method according to claim 8, wherein acquiring the downlink PC5 channel performance parameter according to the second relevant parameter comprises at least one of:
acquiring delay of a downlink PC5 channel based on a difference between the sending time of the RSM message and the receiving time of the RSM message;
calculating downlink delay jitter based on historical delay of the downlink PC5 channel; or,
acquiring downlink packet loss rate based on the serial number of the RSM message.

10. The method according to claim 7, wherein before receiving, by the on-board unit, the RSM message broadcast by the roadside unit, the method further comprises:
broadcasting, by the roadside unit, the RSM message to the on-board unit periodically through the PC5 interface, or broadcasting, by the roadside unit, the RSM message to the on-board unit after being triggered by a predetermined event.

11. The method according to claim 3, wherein determining the communication mode switching between the PC5 interface and the Uu interface of the on-board unit based on the uplink PC5 channel performance parameter and the downlink PC5 channel performance parameter comprises:
acquiring, by the V2X server at the network side, the downlink PC5 channel performance parameter from the on-board unit through the Uu interface; and
determining, by the V2X server at the network side, the communication mode switching between the PC5 interface and the Uu interface of the on-board unit based on the uplink PC5 channel performance parameter and the downlink PC5 channel performance parameter.

12. The method according to claim 3, wherein determining the communication mode switching between the PC5 interface and the Uu interface of the on-board unit based on the uplink PC5 channel performance parameter and the downlink PC5 channel performance parameter comprises:
acquiring, by the on-board unit, the uplink PC5 channel performance parameter from the V2X server at the network side through the Uu interface; and
determining, by the on-board unit, the communication mode switching between the PC5 interface and the Uu interface of the on-board unit based on the uplink PC5 channel performance parameter and the downlink PC5 channel performance parameter.

13. The method according to claim 1, wherein determining the communication mode switching between the PC5 interface and the Uu interface of the on-board unit based on the uplink PC5 channel performance parameter and the downlink PC5 channel performance parameter comprises:
acquiring resource utilization of the PC5 interface and the Uu interface, as well as uplink and downlink channel performance parameters of the Uu interface; and
determining the communication mode switching between the PC5 interface and the Uu interface of the on-board unit based on the resource utilization of the PC5 interface and the Uu interface, the uplink PC5 channel performance parameter, the downlink PC5 channel performance parameter, and the uplink and downlink channel performance parameters of the Uu interface.

14. The method according to claim 3, wherein the V2X server at the network side is located in one of: a base station, a core network, or an application layer.

15. A communication interface switching apparatus in Vehicle-to-Everything, V2X, communication, comprising:
an acquisition unit, configured to acquire an uplink PC5 channel performance parameter according to a Basic Safety Message, BSM, message received by a roadside unit, and acquire a downlink PC5 channel performance parameter according to a Roadside Safety Message, RSM, message received by an on-board unit; and
a determination unit, configured to determine communication mode switching between a PC5 interface and a Uu interface of the on-board unit based on the uplink PC5 channel performance parameter and the downlink PC5 channel performance parameter.

16. A computer-readable storage medium, wherein a computer program is stored in the computer-readable storage medium, and the computer program, when executed by a processor, causes the processor to implement operations of the method according to any one of claims 1 to 14.

17. An electronic device, comprising a memory, a processor, and a computer program stored on the memory and executable on the processor, wherein the processor, when executing the computer program, implements operations of the method according to any one of claims 1 to 14.
